# EUROPÄISCHE PATENTSCHRIFT

(11) **EP 3 274 132 B1**
(45) Veröffentlichungstag und Bekanntmachung des Hinweises auf die Patenterteilung: **24.07.2019**
(21) Anmeldenummer: 16707120.8
(22) Anmeldetag: 01.03.2016
(51) Int. Cl.: B25F 5/00, B25D 17/24, F16F 7/116

(54) **HANDWERKZEUGMASCHINE**
HAND-HELD POWER TOOL
MACHINE-OUTIL PORTATIVE

(30) Priorität: 23.03.2015 DE 102015205149
(43) Veröffentlichungstag der Anmeldung: 31.01.2018
(73) Patentinhaber: Robert Bosch GmbH, 70442 Stuttgart (DE)
(72) Erfinder: WERNER, Immanuel, 72813 St. Johann (DE)
(86) Internationale Anmeldenummer: PCT/EP2016/054292
(87) Internationale Veröffentlichungsnummer: WO 2016/150659

(56) Entgegenhaltungen:
- EP-A2- 1 736 283
- EP-A2- 2 018 939
- WO-A1-2011/072918
- DE-A1-102012 203 758
- DE-U1-202005 021 085

## Beschreibung

### Stand der Technik

Die Erfindung geht insbesondere aus von einer Handwerkzeugmaschine nach dem Oberbegriff des Anspruchs 1.

Es ist bereits eine Handwerkzeugmaschine mit zumindest einem Getriebegehäuse, mit zumindest einer im Getriebegehäuse angeordneten einstufigen Getriebeeinheit, mit zumindest einem Motorgehäuse und mit zumindest einer Ausgleichseinheit, die zumindest ein beweglich gelagertes Ausgleichsmassenelement umfasst, bekannt. Eine solche Handwerkzeugmaschine ist in EP 2 018 939 A1 offenbart.

### Offenbarung der Erfindung

Die Erfindung geht insbesondere aus von einer Handwerkzeugmaschine mit zumindest einem Getriebegehäuse, mit zumindest einer im Getriebegehäuse angeordneten einstufigen Getriebeeinheit, mit zumindest einem Motorgehäuse und mit zumindest einer Ausgleichseinheit, die zumindest ein beweglich gelagertes Ausgleichsmassenelement umfasst.

Es wird vorgeschlagen, dass die Ausgleichseinheit zumindest zum Großteil im Getriebegehäuse oder zwischen dem Getriebegehäuse und dem Motorgehäuse angeordnet ist. Unter "zum Großteil im Getriebegehäuse" soll in diesem Zusammenhang verstanden werden, dass die Ausgleichseinheit zu mindestens 50 Prozent, bevorzugt zu 75 Prozent und besonders bevorzugt zu 100 Prozent mit ihrem Ausgleichseinheitsvolumen innerhalb des Getriebegehäuses angeordnet ist. Unter "zwischen dem Getriebegehäuse und dem Motorgehäuse angeordnet" soll in diesem Zusammenhang verstanden werden, dass die Ausgleichseinheit mit dem Getriebegehäuse und mit dem Motorgehäuse in direktem Kontakt steht. Insbesondere verläuft eine Motorwelle aus dem Motorgehäuse zumindest im Wesentlichen durch einen geometrischen Mittelpunkt und/oder durch einen Masseschwerpunkt der Ausgleichseinheit hindurch in das Getriebegehäuse. Vorteilhaft erstreckt sich eine Bewegungsebene des Ausgleichsmassenelements der Ausgleichseinheit senkrecht zu einer Hauptrotationsachse einer Motorwelle aus dem Motorgehäuse. Das Ausgleichsmassenelement ist vorteilhaft von einem Blechbauteil gebildet. Weiterhin vorteilhaft bildet das Ausgleichsmassenelement einen Blechtilger aus. Weiterhin vorteilhaft ist das Ausgleichsmassenelement durch ein Stanz- und/oder Biegeverfahren hergestellt.

Die Handwerkzeugmaschine ist dazu vorgesehen, von einem Bediener transportmaschinenlos transportiert zu werden. Die Handwerkzeugmaschine weist insbesondere eine Masse auf, die kleiner ist als 50 kg, bevorzugt kleiner als 20 kg und besonders bevorzugt kleiner als 10 kg. Unter einer "einstufigen Getriebeeinheit" soll in diesem Zusammenhang insbesondere verstanden werden, dass eine Drehmomentübertragung von einer Motorwelle unmittelbar auf ein Exzentergetriebeelement, das zum Antreiben eines Exzenters vorgesehen ist, und unmittelbar auf ein Hammerrohrgetriebeelement erfolgt. Insbesondere steht die Motorwelle in einem direkten Kontakt mit dem Exzentergetriebeelement und dem Hammerrohrgetriebeelement. Vorteilhaft ist das Exzentergetriebeelement von einer Abtriebswelle mit einer einstückigen Verzahnung und/oder einem einstückigen Exzenter gebildet. Vorzugsweise ist das Hammerrohrgetriebeelement von einer Abtriebswelle gebildet, die eine Verzahnung zum Antrieb des Hammerrohrs und eine Verzahnung zur Kopplung mit der Motorwelle aufweist. Die Motorwelle ist zum Direktantrieb durch einen Motor, insbesondere einen Elektromotor, und/oder zum Antrieb durch ein dem Motor nachgeschaltetes Getriebe vorgesehen. Insbesondere ist die Motorwelle zwischen dem Exzentergetriebeelement und dem Hammerrohrgetriebeelement vorgesehen. Weiterhin vorteilhaft liegen Drehachsen der Motorwelle, des Exzentergetriebeelements und des Hammerrohrgetriebeelements in einer gemeinsamen Ebene.

Die Ausgleichseinheit umfasst vorteilhaft zumindest eine Gehäuseeinheit, innerhalb derer zumindest das beweglich gelagerte Ausgleichsmassenelement und zumindest ein Federelement angeordnet sind. Das Ausgleichsmassenelement ist mit dem zumindest einen Federelement gekoppelt und ist dazu vorgesehen, in Bewegung, bevorzugt in Schwingung, versetzt zu werden, um dabei die auftretenden Vibrationsamplituden der Handwerkzeugmaschine während eines Betriebs der Handwerkzeugmaschine zu reduzieren. Die Gehäuseeinheit der Ausgleichseinheit umfasst vorzugsweise zwei Gehäuseteile, die form- und kraftschlüssig miteinander verbindbar sind. Durch die erfindungsgemäße Anordnung der Ausgleichseinheit kann vorteilhaft vorhandener, bisher ungenutzter Raum in der Handwerkzeugmaschine ausgenützt werden. Ferner können vorteilhaft zur Anordnung der Ausgleichseinheit die Abmessungen der Handwerkzeugmaschine beibehalten werden. Durch die Anordnung der Ausgleichseinheit im Getriebegehäuse kann zudem besonders vorteilhaft die Fettmenge innerhalb des Getriebegehäuses reduziert werden.

Ferner wird vorgeschlagen, dass die Ausgleichseinheit eine maximale Erstreckung entlang einer Längsachse der Ausgleichseinheit aufweist, die zumindest im Wesentlichen einer maximalen Erstreckung eines Getriebeaufnahmeraums des Getriebegehäuses entlang einer Längsachse des Getriebegehäuses entspricht. Dadurch kann die Handwerkzeugmaschine vorteilhaft besonders kompakt ausgebildet werden. Ferner kann eine besonders hohe Fettmenge innerhalb des Getriebegehäuses reduziert werden. Die Längsachse der Ausgleichseinheit und die Längsachse des Getriebegehäuses verlaufen in einem montierten Zustand vorzugsweise jeweils senkrecht zu zwei einander gegenüberliegenden, am weitesten voneinander entfernten Begrenzungsflächen der Ausgleichseinheit und/oder parallel zu einer Bewegungsrichtung des Ausgleichsmassenelements. Bevorzugt verläuft die Längsachse der Ausgleichseinheit parallel zu einer Werkzeugrotationsachse der Handwerkzeugmaschine. Unter einem "Getriebeaufnahmeraum" des Getriebegehäuses soll insbesondere ein Raum verstanden werden, der zur Aufnahme eines Getriebes vorgesehen ist. Insbesondere ist der Getriebeaufnahmeraum zumindest teilweise vom Getriebegehäuse begrenzt.

Erfindungsgemäß umfasst die einstufige Getriebeeinheit zumindest ein Getriebeelement, das zumindest teilweise die Ausgleichseinheit überlappt. Dadurch kann eine besonders hohe Vibrationsreduzierung erreicht werden. Ferner kann eine besonders hohe Bauteildichte innerhalb der Handwerkzeugmaschine erzielt werden. Das Getriebeelement umfasst vorzugsweise eine Getriebewelle, ein Zahnrad und/oder ein Exzenterrad. Insbesondere schneiden das zumindest eine Getriebeelement und die Ausgleichseinheit eine selbe Ebene, die parallel zur Bewegungsebene des Ausgleichsmassenelements verläuft.

Erfindungsgemäß weist die Ausgleichseinheit zumindest eine Durchführöffnung auf, durch die sich das Getriebeelement zumindest teilweise hindurch erstreckt. Dadurch kann eine besonders hohe Vibrationsreduzierung erreicht werden. Ein Gesamtbauraum des Getriebegehäuses, des Motorgehäuses und der Ausgleichseinheit kann ferner besonders gering gehalten werden.

Ferner wird vorgeschlagen, dass die Ausgleichseinheit zumindest eine Hauptkontaktfläche aufweist, die zumindest zum Großteil am Getriebegehäuse anliegt. Dadurch kann eine besonders sichere Lagerung der Ausgleichseinheit am Getriebegehäuse erzielt werden. Ferner kann ein Spiel zwischen der Ausgleichseinheit und dem Getriebegehäuse besonders gering gehalten werden, wodurch eine besonders hohe Reduzierung einer Vibration erzielt werden kann. Die Hauptkontaktfläche liegt insbesondere direkt am Getriebegehäuse an.

Zudem wird vorgeschlagen, dass die Ausgleichseinheit zumindest eine weitere Hauptkontaktfläche aufweist, die zumindest zum Großteil am Motorgehäuse anliegt. Dadurch kann eine besonders sichere Lagerung der Ausgleichseinheit am Motorgehäuse erzielt werden. Ferner kann ein Spiel zwischen der Ausgleichseinheit und dem Motorgehäuse besonders gering gehalten werden, wodurch eine besonders hohe Reduzierung einer Vibration erzielt werden kann. Die weitere Hauptkontaktfläche liegt insbesondere direkt am Motorgehäuse an.

Des Weiteren wird vorgeschlagen, dass die Ausgleichseinheit als eine vormontierbare Baugruppe ausgebildet ist. Dadurch kann vorteilhaft eine besonders einfache und schnelle Montage der Handwerkzeugmaschine erzielt werden. Unter "vormontierbar" soll in diesem Zusammenhang verstanden werden, dass mehrere Bauteile der Ausgleichseinheit vormontiert sind und als Ganzes in einem Gesamtsystem, insbesondere in einer Handwerkzeugmaschine, verbaut werden. Die Ausgleichseinheit weist bevorzugt zumindest ein Befestigungselement auf, das dazu vorgesehen ist, mit dem Gesamtsystem lösbar verbunden zu werden.

Ferner wird vorgeschlagen, dass das Ausgleichsmassenelement zumindest teilweise als Hohlkörper ausgebildet ist. Dadurch können weitere Bauteile, insbesondere Federelemente, besonders platzsparend mit dem Ausgleichsmassenelement zusammenwirken. Besonders bevorzugt umfasst das Ausgleichsmassenelement zumindest einen rohrförmigen Aufnahmebereich.

Weiterhin wird vorgeschlagen, dass das Ausgleichsmassenelement zumindest eine Durchführöffnung zu einer Durchführung zumindest eines Getriebeelements der Getriebeeinheit aufweist. Dadurch kann ein Masseschwerpunkt des Ausgleichsmassenelement besonders vorteilhaft in die Nähe des Getriebeelements bewegt werden, wodurch eine besonders gute Reduzierung von Vibrationen erzielt werden kann. Ferner kann ein vorhandener Raum besonders effizient genutzt werden. Die Durchführöffnung des Ausgleichsmassenelements ist vorzugsweise von einem Langloch gebildet.

Des Weiteren wird vorgeschlagen, dass die Ausgleichseinheit zumindest eine Gehäuseeinheit aufweist, die ein Exzenterelement der Getriebeeinheit zumindest teilweise umgibt. Dadurch kann ein benötigter Bauraum vorteilhaft reduziert werden.

Die erfindungsgemäße Handwerkzeugmaschine soll hierbei nicht auf die oben beschriebene Anwendung und Ausführungsform beschränkt sein. Insbesondere kann die erfindungsgemäße Handwerkzeugmaschine zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung sind zwei Ausführungsbeispiele der Erfindung dargestellt. Die Zeichnung, die Beschreibung und die Ansprüche enthalten zahlreiche Merkmale in Kombination.

Es zeigen:
- Fig. 1: eine Handwerkzeugmaschine in einer Seitenansicht,
- Fig. 2: eine perspektivische Ansicht eines Teils einer Ausgleichseinheit der Handwerkzeugmaschine in einem ersten Montageschritt,
- Fig. 3: eine perspektivische Ansicht eines Teils der Ausgleichseinheit nach Figur 2 in einem weiteren Montageschritt,
- Fig. 4: eine perspektivische Ansicht der Ausgleichseinheit nach Figur 2 in einem weiteren Montageschritt,
- Fig. 5: eine Schnittdarstellung der Ausgleichseinheit nach Figur 2,
- Fig. 6: eine Detailansicht der Ausgleichseinheit nach Figur 2,
- Fig. 7: eine perspektivische Ansicht eines Getriebegehäuses der Handwerkzeugmaschine und der Ausgleichseinheit vor einer Montage,
- Fig. 8: eine perspektivische Ansicht des Getriebegehäuses der Handwerkzeugmaschine und der Ausgleichseinheit in einem montierten Zustand,
- Fig. 9: eine Schnittdarstellung des Getriebegehäuses der Handwerkzeugmaschine und der Ausgleichseinheit in einem montierten Zustand,
- Fig. 10: eine perspektivische Ansicht des montierten Getriebegehäuses mit einer Gehäuseabdeckung,
- Fig. 11: eine perspektivische Ansicht eines Teils einer alternativen Ausgleichseinheit der Handwerkzeugmaschine in einem ersten Montageschritt,
- Fig. 12: eine perspektivische Ansicht eines Ausgleichsmassenelements der alternativen Ausgleichseinheit nach Figur 11,
- Fig. 13: eine Schnittdarstellung des Ausgleichsmassenelements nach Figur 12,
- Fig. 14: eine perspektivische Ansicht der Ausgleichseinheit nach Figur 11 in einem weiteren Montageschritt,
- Fig. 15: eine perspektivische Ansicht der Ausgleichseinheit nach Figur 11 in einem montierten Zustand,
- Fig. 16: eine Seitenansicht eines alternativen Getriebegehäuses der Handwerkzeugmaschine mit der Ausgleichseinheit nach Figur 11,
- Fig. 17: eine perspektivische Ansicht eines Motorgehäuses der Handwerkzeugmaschine mit der Ausgleichseinheit nach Figur 11 und
- Fig. 18: eine Schnittdarstellung durch die Ausgleichseinheit, das Getriebegehäuse und das Motorgehäuse in einem montierten Zustand.

### Beschreibung der Ausführungsbeispiele

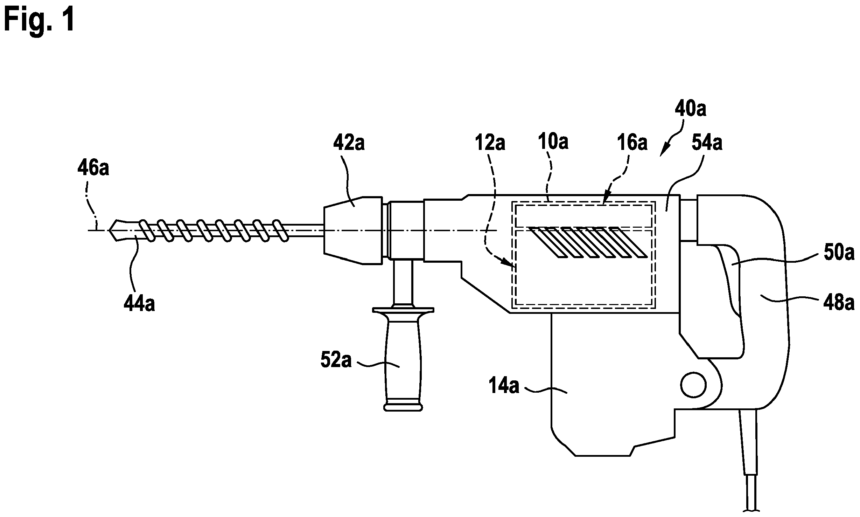

Die Figur 1 zeigt eine Handwerkzeugmaschine, die von einem Bohrhammer 40a gebildet ist. Die Handwerkzeugmaschine umfasst eine Werkzeugaufnahme 42a. Die Werkzeugaufnahme 42a ist zur Aufnahme eines Einsatzwerkzeugs 44a vorgesehen. Die Werkzeugaufnahme 42a dreht in einem Bohrbetrieb um eine Hauptrotationsachse 46a. Zusätzlich zum Bohrbetrieb kann ein Schlagbetrieb eingestellt sein. Zur Bedienung weist die Handwerkzeugmaschine einen Handgriff 48a mit einem Betätigungsmittel 50a auf. Das Betätigungsmittel 50a ist als Taster ausgebildet und zur händischen Steuerung der Handwerkzeugmaschine vorgesehen. Die Handwerkzeugmaschine weist einen weiteren Handgriff 52a auf, der zur Führung der Handwerkzeugmaschine mit einer weiteren Hand vorgesehen ist. Die Handwerkzeugmaschine weist ein Maschinengehäuse 54a auf. Die Handwerkzeugmaschine weist ein Getriebegehäuse 10a auf. Wie schematisch angedeutet, ist das Getriebegehäuse 10a innerhalb des Maschinengehäuses 54a angeordnet. Die Handwerkzeugmaschine umfasst eine einstufige Getriebeeinheit 12a. Die einstufige Getriebeeinheit 12a ist im Getriebegehäuse 10a angeordnet. Die Handwerkzeugmaschine umfasst ein Motorgehäuse 14a. Das Motorgehäuse 14a ist außerhalb des Maschinengehäuses 54a angeordnet. Innerhalb des Motorgehäuses 14a ist ein nicht näher gezeigter Elektromotor angeordnet. Die Handwerkzeugmaschine umfasst eine Ausgleichseinheit 16a. Die Ausgleichseinheit 16a ist innerhalb des Getriebegehäuses 10a angeordnet.

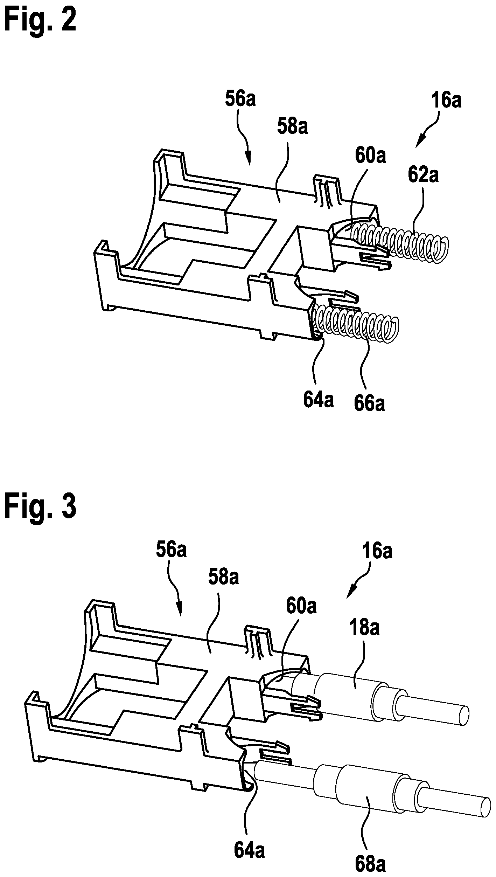

Ein Teil der Ausgleichseinheit 16a ist in der Figur 2 dargestellt. Die Ausgleichseinheit 16a umfasst eine Gehäuseeinheit 56a. Die Gehäuseeinheit 56a weist ein erstes Gehäuseteil 58a auf. Das erste Gehäuseteil 58a weist eine erste Ausnehmung 60a auf. Die erste Ausnehmung 60a ist zylinderförmig ausgebildet. Die Ausgleichseinheit 16a weist ein erstes Federelement 62a auf. Das erste Federelement 62a bildet eine Schraubenfeder aus. Die erste Ausnehmung 60a ist zur Aufnahme des ersten Federelements 62a vorgesehen. In einem ersten Montageschritt wird das erste Federelement 62a in die erste Ausnehmung 60a eingeführt. Das erste Gehäuseteil 58a weist eine zweite Ausnehmung 64a auf. Die zweite Ausnehmung 64a ist zylinderförmig ausgebildet. Die Ausgleichseinheit 16a weist ein zweites Federelement 66a auf. Das zweite Federelement 66a bildet eine Schraubenfeder aus. Die zweite Ausnehmung 64a ist zur Aufnahme des zweiten Federelements 66a vorgesehen. Im ersten Montageschritt wird das zweite Federelement 66a in die zweite Ausnehmung 64a eingeführt.

Wie in der Figur 3 gezeigt, weist die Ausgleichseinheit 16a ein erstes Ausgleichsmassenelement 18a auf. Die Ausgleichseinheit 16a weist ein zweites Ausgleichsmassenelement 68a auf. Das erste Ausgleichsmassenelement 18a ist zylinderförmig ausgebildet. Das erste Ausgleichsmassenelement 18a weist in eine Haupterstreckungsrichtung betrachtet nacheinander verschiedene Zylinderdurchmesser auf. Das erste Ausgleichsmassenelement 18a und das zweite Ausgleichsmassenelement 68a sind identisch ausgebildet. Das erste Ausgleichsmassenelement 18a ist innerhalb der Gehäuseeinheit 56a angeordnet. Genauer gesagt ist das erste Ausgleichsmassenelement 18a innerhalb der ersten Ausnehmung 60a angeordnet. Das zweite Ausgleichsmassenelement 68a ist innerhalb der Gehäuseeinheit 56a angeordnet. Genauer gesagt ist das zweite Ausgleichsmassenelement 68a innerhalb der zweiten Ausnehmung 64a angeordnet. Die Ausgleichsmassenelemente 18a, 68a sind innerhalb der Gehäuseeinheit 56a beweglich gelagert. Die Ausgleichsmassenelemente 18a, 68a sind mit den Federelementen 62a, 66a gekoppelt und dazu vorgesehen, in Schwingung versetzt zu werden.

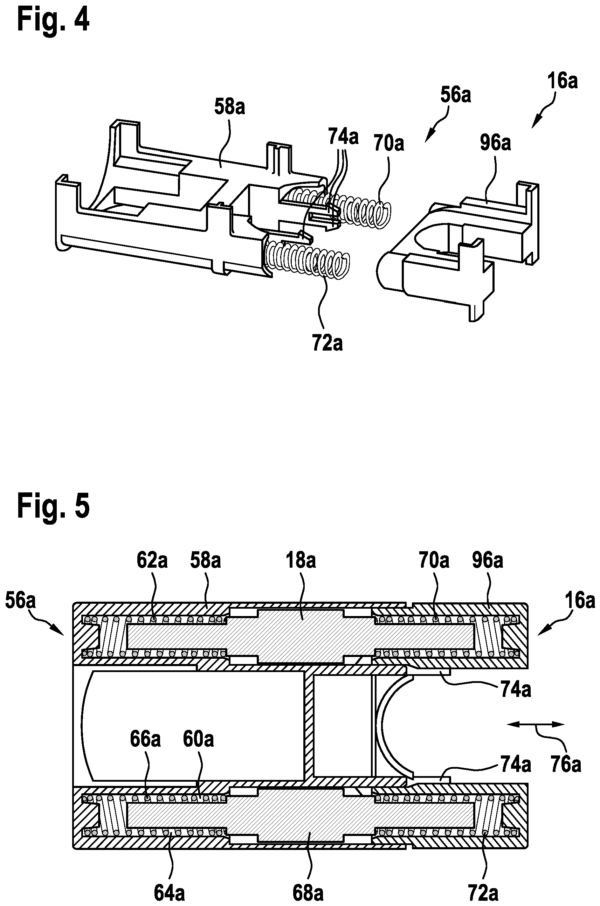

Wie in der Figur 4 gezeigt, weist die Ausgleichseinheit 16a ein drittes Federelement 70a auf. Das dritte Federelement 70a bildet eine Schraubenfeder aus. Die erste Ausnehmung 60a ist zur Aufnahme des dritten Federelements 70a vorgesehen. In einem weiteren Montageschritt wird das dritte Federelement 70a in die erste Ausnehmung 60a eingeführt. Die Ausgleichseinheit 16a weist ein viertes Federelement 72a auf. Das vierte Federelement 72a bildet eine Schraubenfeder aus. Die zweite Ausnehmung 64a ist zur Aufnahme des vierten Federelements 72a vorgesehen. Im weiteren Montageschritt wird das vierte Federelement 66a in die zweite Ausnehmung 64a eingeführt.

Die Gehäuseeinheit 56a umfasst ein zweites Gehäuseteil 96a. Das zweite Gehäuseteil 96a wird in einem Montageschritt mit dem ersten Gehäuseteil 58a verrastet. Die Gehäuseeinheit 56a umfasst Rastmittel 74a, die zur Herstellung einer Rastverbindung vorgesehen sind. Das zweite Gehäuseteil 96a umfasst Ausnehmungen, die zur Aufnahme des dritten Federelements 70a und des vierten Federelements 72a vorgesehen sind.

Die Figur 5 zeigt die Ausgleichseinheit 16a in einem montierten Zustand. Die Ausgleichseinheit 16a ist als eine vormontierbare Baugruppe ausgebildet. Das erste Gehäuseteil 58a und das zweite Gehäuseteil 96a sind über die Rastmittel 74a formschlüssig miteinander verbunden. Die Federelemente 62a, 66a, 70a, 72a sind auf Druck vorgespannt. Die Federelemente 62a, 66a, 70a, 72a drücken das erste Gehäuseteil 58a und das zweite Gehäuseteil 96a in eine Längsrichtung 76a auseinander. Die Längsrichtung 76a verläuft parallel zur Rotationssymmetrieachse des Ausgleichsmassenelements 18a. In einem montierten Zustand verläuft die Längsrichtung 76a parallel zur Hauptrotationsachse 46a. Das erste Gehäuseteil 58a und das zweite Gehäuseteil 96a sind beweglich zueinander ausgebildet. Genauer gesagt sind das erste Gehäuseteil 58a und das zweite Gehäuseteil 96a zueinander in Längsrichtung 76a verschiebbar ausgebildet. Das erste Gehäuseteil 58a und das zweite Gehäuseteil 96a lassen sich entgegen einer Federkraft der Federelemente 62a, 66a, 70a, 72a aufeinander zu bewegen, bis sie aneinander anschlagen (Figur 5).

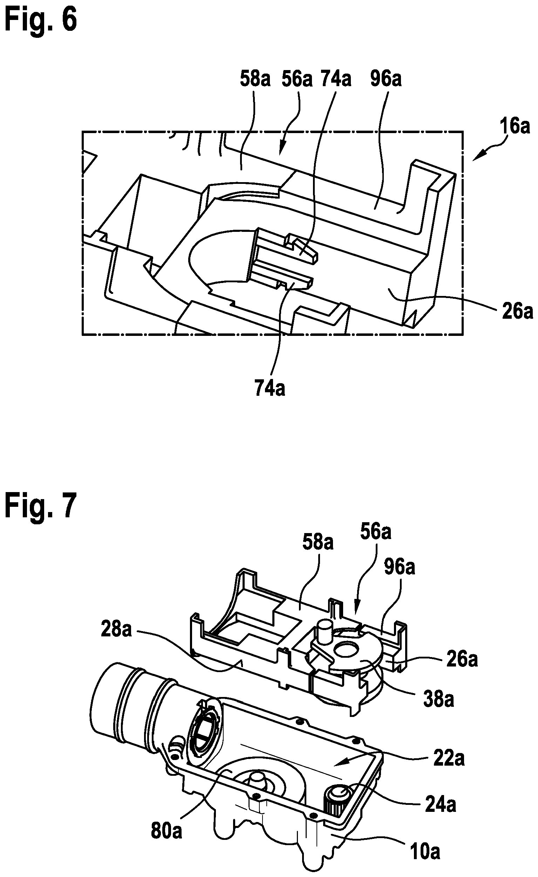

Die Figuren 7 bis 9 zeigen das Getriebegehäuse 10a und die Ausgleichseinheit 16a vor einer Montage. Das Getriebegehäuse 10a begrenzt einen halbschalenförmigen Getriebeaufnahmeraum 22a. Die einstufigen Getriebeeinheit 12a umfasst ein erstes Getriebeelement 24a. Die einstufige Getriebeeinheit 12a umfasst ein zweites Getriebeelement 80a. Das erste Getriebeelement 24a ist als Exzentergetriebeelement ausgebildet. Das erste Getriebeelement 24a ist zum Antreiben eines Exzenterelements 38a vorgesehen. Das Exzenterelement 38a ist zum Antrieb eines nicht näher gezeigten Schlagwerks vorgesehen. Die Gehäuseeinheit 56a umgibt das Exzenterelement 38a der Getriebeeinheit 12a teilweise.

Die Ausgleichseinheit 16a weist eine Durchführöffnung 26a auf. Die Durchführöffnung 26a ist u-förmig ausgebildet. Das erste Getriebeelement 24a überlappt die Ausgleichseinheit 16a in einem montierten Zustand. Genauer gesagt erstreckt sich das erste Getriebeelement 24a durch die Durchführöffnung 26a hindurch. Das erste Getriebeelement 24a steht in einem montierten Zustand in einem direkten Kontakt mit einer Motorwelle 82a. Das zweite Getriebeelement 80a ist als Hammerrohrgetriebeelement ausgebildet. Das zweite Getriebeelement 80a ist zum Antrieb eines Hammerrohrs 98a vorgesehen. Das zweite Getriebeelement 80a steht in einem montierten Zustand in einem direkten Kontakt mit der Motorwelle 82a. Das erste Getriebeelement 24a und das zweite Getriebeelement 80a sind kontaktfrei zueinander angeordnet.

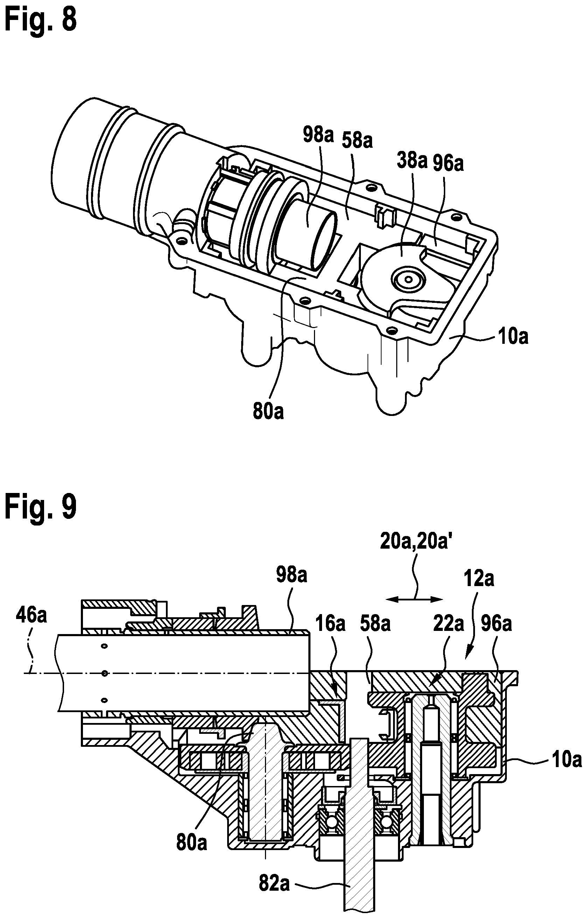

In der Figur 8 ist die Ausgleichseinheit 16a in das Getriebegehäuse 10a eingesetzt. Die Ausgleichseinheit 16a weist eine Hauptkontaktfläche 28a auf, die zum Großteil am Getriebegehäuse 10a anliegt. Die Hauptkontaktfläche 28a liegt dabei direkt am Getriebegehäuse 10a an. Die Ausgleichseinheit 16a weist eine maximale Erstreckung entlang einer Längsachse 20a der Ausgleichseinheit 16a auf, die zumindest im Wesentlichen einer maximalen Erstreckung des Getriebeaufnahmeraums 22a des Getriebegehäuses 10a entlang einer Längsachse 20a' des Getriebegehäuses 10a entspricht. Die Längsachse 20a verläuft im montierten Zustand parallel zur Hauptrotationsachse 46a. Die Ausgleichseinheit 16a weist eine maximale Erstreckung quer zur Längsachse 20a der Ausgleichseinheit 16a auf, die zumindest im Wesentlichen einer maximalen Erstreckung des Getriebeaufnahmeraums 22a des Getriebegehäuses 10a quer zur Längsachse 20a' des Getriebegehäuses 10a entspricht.

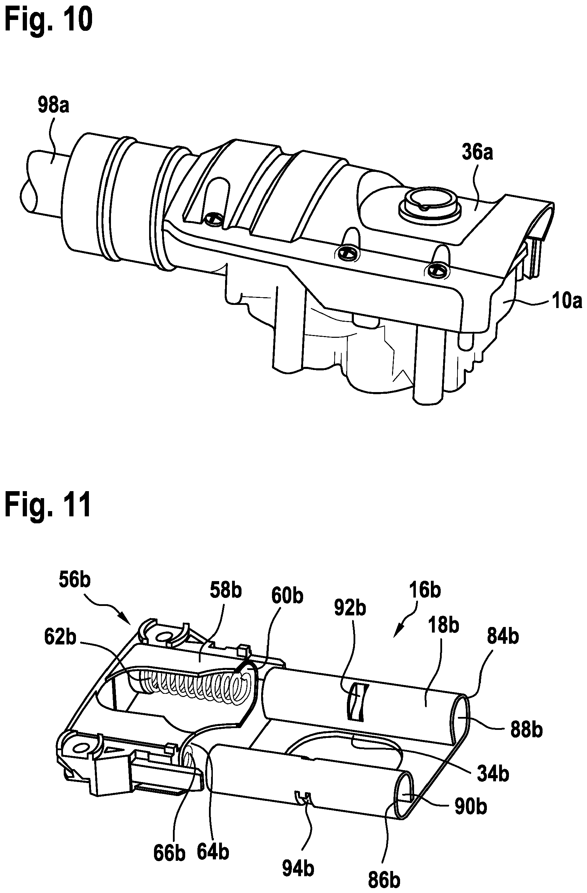

Wie in der Figur 10 gezeigt, weist die Handwerkzeugmaschine einen Gehäusedeckel 36a auf. Der Gehäusedeckel 36a ist im montierten Zustand an dem Getriebegehäuse 10a angeordnet. Der Gehäusedeckel 36a schließt den Getriebeaufnahmeraums 22a ab. Die Ausgleichseinheit 16a ist vollständig im Getriebegehäuse 10a angeordnet. Der Gehäusedeckel 36a fixiert die Ausgleichseinheit 16a relativ zum Getriebegehäuse 10a in eine Vertikalrichtung. Die Vertikalrichtung verläuft parallel zu einer Drehachse der Motorwelle 82a.

In den Figuren 11 bis 18 ist ein weiteres Ausführungsbeispiel der Erfindung gezeigt. Die nachfolgende Beschreibung und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung des anderen Ausführungsbeispiels der Figuren 1 bis 10, verwiesen werden kann. Zur Unterscheidung der Ausführungsbeispiele ist der Buchstabe a den Bezugszeichen des Ausführungsbeispiels in den Figuren 1 bis 10 nachgestellt. In den Ausführungsbeispielen der Figuren 11 bis 18 ist der Buchstabe a durch den Buchstaben b ersetzt.

Die Figur 11 zeigt einen Teil einer alternativ ausgebildeten Ausgleichseinheit 16b einer Handwerkzeugmaschine. Die Handwerkzeugmaschine entspricht im grundsätzlichen Aufbau der in der Figur 1 gezeigten Handwerkzeugmaschine. Die Ausgleichseinheit 16b umfasst eine Gehäuseeinheit 56b. Die Gehäuseeinheit 56b weist ein erstes Gehäuseteil 58b auf. Das erste Gehäuseteil 58b weist eine erste Ausnehmung 60b auf. Die Ausgleichseinheit 16b weist ein erstes Federelement 62b auf. Das erste Federelement 62b bildet eine Schraubenfeder aus. Die erste Ausnehmung 60b ist zur Aufnahme des ersten Federelements 62b vorgesehen. In einem ersten Montageschritt wird das erste Federelement 62b in die erste Ausnehmung 60b eingeführt. Das erste Gehäuseteil 58b weist eine zweite Ausnehmung 64b auf. Die Ausgleichseinheit 16b weist ein zweites Federelement 66b auf. Das zweite Federelement 66b bildet eine Schraubenfeder aus. Die zweite Ausnehmung 64b ist zur Aufnahme des zweiten Federelements 66b vorgesehen. Im ersten Montageschritt wird das zweite Federelement 66b in die zweite Ausnehmung 64b eingeführt.

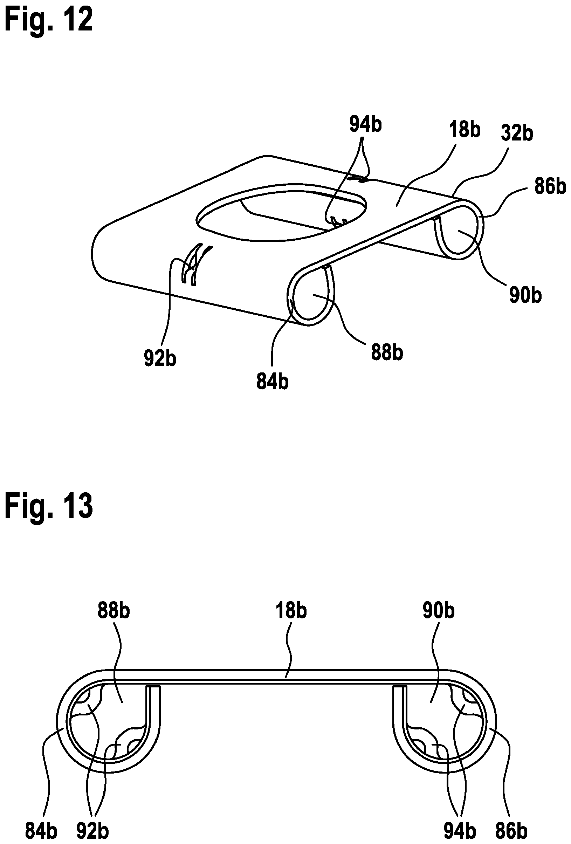

Die Ausgleichseinheit 16b umfasst ein beweglich gelagertes Ausgleichsmassenelement 18b. Das Ausgleichsmassenelement 18b ist in den Figuren 12 und 13 näher dargestellt. Das Ausgleichsmassenelement 18b ist von einem Blechbauteil gebildet. Genauer gesagt bildet das Ausgleichsmassenelement 18b einen Blechtilger aus. Das Ausgleichsmassenelement 18b ist in einem Stanz- und/oder Biegeverfahren hergestellt. Das Ausgleichsmassenelement 18b weist eine Durchführöffnung 34b auf. Die Durchführöffnung 34b des Ausgleichsmassenelements 18b ist von einem Langloch gebildet. Die Durchführöffnung 34b ist zentral in einer ebenen Fläche der Ausgleichsmassenelements 18b angeordnet. Das Ausgleichsmassenelement 18b ist teilweise als Hohlkörper 32b ausgebildet. Das Ausgleichsmassenelement 18b weist eine ebene Haupterstreckung auf, wobei gegenüberliegende Endbereiche 84b, 86b um 270° umgebogen sind. Die Endbereiche 84b, 86b bilden jeweils einen rohrförmigen Aufnahmebereich 88b, 90b aus. Das Ausgleichsmassenelement 18b wird in einem Montageschritt in die Ausnehmungen 60b, 64b eingeführt. Die Endbereiche 84b, 86b nehmen dabei die Federelemente 62b, 66b auf. In eine Längserstreckungsrichtung des Ausgleichsmassenelements 18b betrachtet sind Blockierelemente 92b, 94b angeordnet. Die Blockierelemente 92b, 94b ragen in die Aufnahmebereiche 88b, 90b herein. Die Blockierelemente 92b, 94b sind zur Anlage an den Federelementen 62b, 66b vorgesehen. Die Blockierelemente 92b, 94b sind von Biegeteilen gebildet. Die Blockierelemente 92b, 94b sind einstückig mit dem Ausgleichsmassenelement 18b ausgebildet.

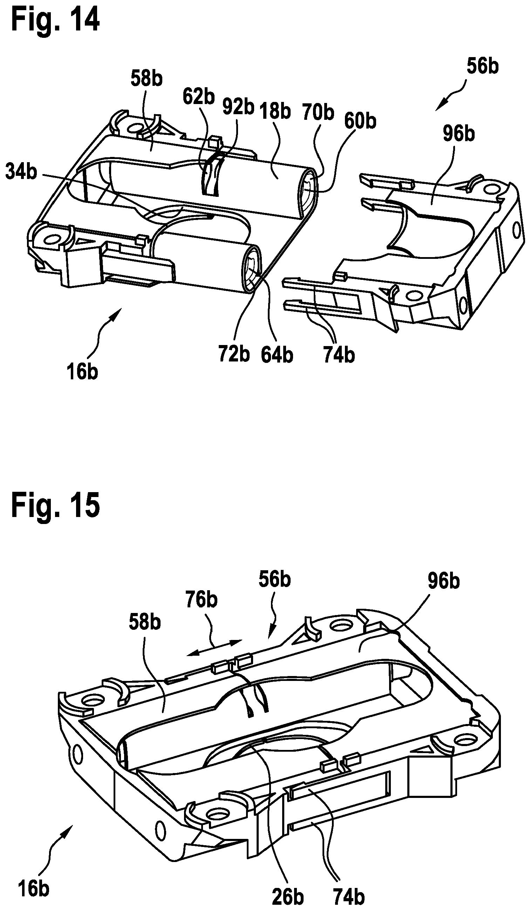

Wie in der Figur 14 gezeigt, weist die Ausgleichseinheit 16b ein drittes Federelement 70b auf. Das dritte Federelement 70b bildet eine Schraubenfeder aus. Die erste Ausnehmung 60b ist zur Aufnahme des dritten Federelements 70b vorgesehen. In einem weiteren Montageschritt wird das dritte Federelement 70b in die erste Ausnehmung 60b eingeführt. Die Ausgleichseinheit 16b weist ein viertes Federelement 72b auf. Das vierte Federelement 72b bildet eine Schraubenfeder aus. Die zweite Ausnehmung 64b ist zur Aufnahme des vierten Federelements 72b vorgesehen. Im weiteren Montageschritt wird das vierte Federelement 72b in die zweite Ausnehmung 64b eingeführt.

Die Gehäuseeinheit 56b umfasst ein zweites Gehäuseteil 96b. Das zweite Gehäuseteil 96b wird in einem Montageschritt mit dem ersten Gehäuseteil 58b verrastet. Die Gehäuseeinheit 56b umfasst Rastmittel 74b, die zur Herstellung einer Rastverbindung vorgesehen sind. Das zweite Gehäuseteil 96b umfasst Ausnehmungen, die zur Aufnahme des Ausgleichsmassenelements 18b, des dritten Federelements 70b und des vierten Federelements 72b vorgesehen sind.

Die Figur 15 zeigt die Ausgleichseinheit 16b in einem montierten Zustand. Die Ausgleichseinheit 16b ist als eine vormontierbare Baugruppe ausgebildet. Das erste Gehäuseteil 58b und das zweite Gehäuseteil 96b sind über die Rastmittel 74b formschlüssig miteinander verbunden. Die Federelemente 62b, 66b, 70b, 72b sind auf Druck vorgespannt. Die Federelemente 62b, 66b, 70b, 72b drücken das erste Gehäuseteil 58b und das zweite Gehäuseteil 96b in eine Längsrichtung 76b auseinander. Das erste Gehäuseteil 58b und das zweite Gehäuseteil 96b sind beweglich zueinander ausgebildet. Genauer gesagt sind das erste Gehäuseteil 58b und das zweite Gehäuseteil 96b zueinander in Längsrichtung 76b verschiebbar ausgebildet. Das erste Gehäuseteil 58b und das zweite Gehäuseteil 96b lassen sich entgegen einer Federkraft der Federelemente 62b, 66b, 70b, 72b aufeinander zu bewegen, bis sie aneinander anschlagen.

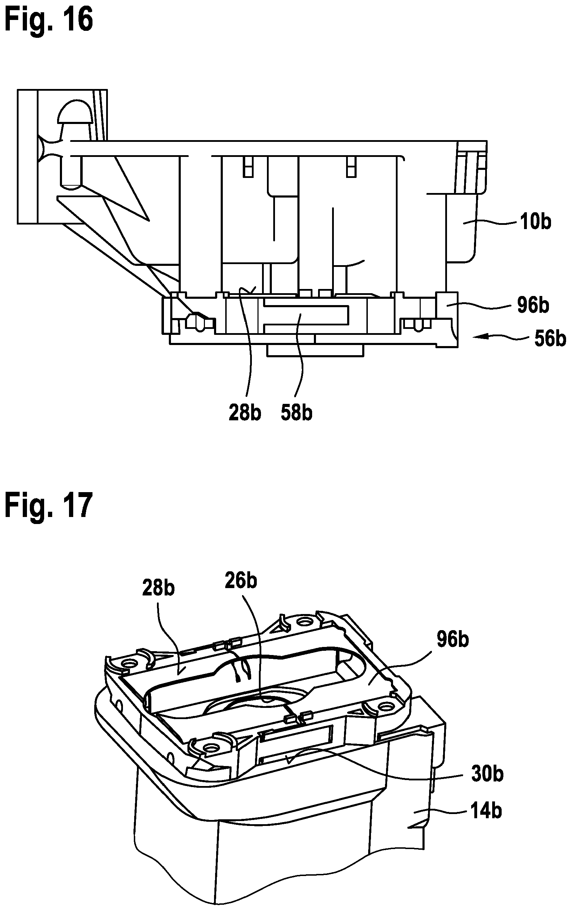

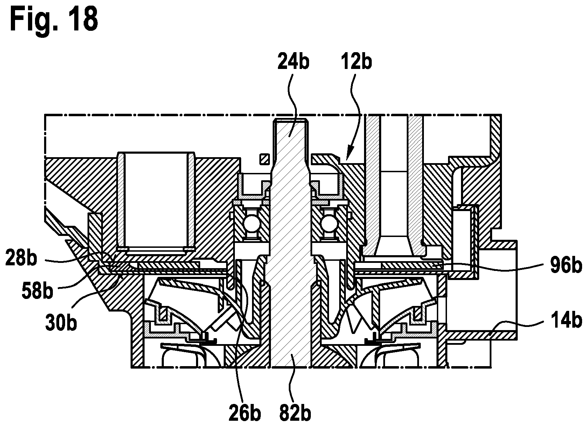

Wie in der Figur 16 gezeigt, weist die Handwerkzeugmaschine ein Getriebegehäuse 10b auf. Die Ausgleichseinheit 16b weist eine Hauptkontaktfläche 28b auf, die zum Großteil am Getriebegehäuse 10b anliegt. Die Hauptkontaktfläche 28b liegt direkt am Getriebegehäuse 10b an. Die Hauptkontaktfläche 28b liegt an einer Außenseite des Getriebegehäuses 10b an. Wie weiter in den Figuren 17 und 18 gezeigt, weist die Handwerkzeugmaschine ein Motorgehäuse 14b auf. Die Ausgleichseinheit 16b weist eine weitere Hauptkontaktfläche 30b auf, die zum Großteil am Motorgehäuse 14b anliegt. Die weitere Hauptkontaktfläche 30b liegt direkt am Motorgehäuse 14b an. Aus dem Motorgehäuse 14b ragt eine Motorwelle 82b. Wie in der Figur 18 dargestellt, weist die Handwerkzeugmaschine eine Getriebeeinheit 12b auf. Die Getriebeeinheit 12b ist einstufig ausgebildet. Der Aufbau der Getriebeeinheit 12b entspricht dabei der im ersten Ausführungsbeispiel gezeigten Getriebeeinheit 12a. Die Getriebeeinheit 12b ist im Getriebegehäuse 10b angeordnet. Die Motorwelle 82b bildet ein Getriebeelement 24b der Getriebeeinheit 12b aus. Das Getriebeelement 24b überlappt teilweise die Ausgleichseinheit 16b. Die Ausgleichseinheit 16b weist eine Durchführöffnung 26b auf. Die Durchführöffnung 26b ist zu einer Durchführung des Getriebeelements 24b der Getriebeeinheit 12b vorgesehen. Wie weiter in der Figur 18 gezeigt, ist die Ausgleichseinheit 16b zwischen dem Getriebegehäuse 10b und dem Motorgehäuse 14b angeordnet.

## Patentansprüche

1. Handwerkzeugmaschine, insbesondere Bohr- und/oder Meißelhammer, mit zumindest einem Getriebegehäuse (10a; 10b), mit zumindest einer im Getriebegehäuse (10a; 10b) angeordneten einstufigen Getriebeeinheit (12a; 12b), mit zumindest einem Motorgehäuse (14a; 14b) und mit zumindest einer Ausgleichseinheit (16a; 16b), die zumindest ein beweglich gelagertes Ausgleichsmassenelement (18a, 68a; 18b) umfasst, wobei die Ausgleichseinheit (16a) zumindest zum Großteil im Getriebegehäuse (10a) oder zwischen dem Getriebegehäuse (10b) und dem Motorgehäuse (14b) angeordnet ist, **dadurch gekennzeichnet, dass** die einstufige Getriebeeinheit (12a; 12b) zumindest ein Getriebeelement (24a; 24b) umfasst, das zumindest teilweise die Ausgleichseinheit (16a; 16b) überlappt, wobei die Ausgleichseinheit (16a; 16b) zumindest eine Durchführöffnung (26a; 26b) aufweist, durch die sich das Getriebeelement (24a; 24b) zumindest teilweise hindurch erstreckt.

2. Handwerkzeugmaschine nach Anspruch 1, **dadurch gekennzeichnet, dass** die Ausgleichseinheit (16a) eine maximale Erstreckung entlang einer Längsachse (20a) der Ausgleichseinheit (16a) aufweist, die zumindest im Wesentlichen einer maximalen Erstreckung eines Getriebeaufnahmeraums (22a) des Getriebegehäuses (10a) entlang einer Längsachse (20a') des Getriebegehäuses (10a) entspricht.

3. Handwerkzeugmaschine nach einem der vorherigen Ansprüche, **dadurch gekennzeichnet, dass** die Ausgleichseinheit (16a; 16b) zumindest eine Hauptkontaktfläche (28a; 28b) aufweist, die zumindest zum Großteil am Getriebegehäuse (10a; 10b) anliegt.

4. Handwerkzeugmaschine nach Anspruch 3, **dadurch gekennzeichnet, dass** die Ausgleichseinheit (16b) zumindest eine weitere Hauptkontaktfläche (30b) aufweist, die zumindest zum Großteil am Motorgehäuse (14b) anliegt.

5. Handwerkzeugmaschine nach einem der vorherigen Ansprüche, **dadurch gekennzeichnet, dass** die Ausgleichseinheit (16a; 16b) als eine vormontierbare Baugruppe ausgebildet ist.

6. Handwerkzeugmaschine nach einem der vorherigen Ansprüche, **dadurch gekennzeichnet, dass** das Ausgleichsmassenelement (18b) zumindest teilweise als Hohlkörper (32b) ausgebildet ist.

7. Handwerkzeugmaschine nach einem der vorherigen Ansprüche, **dadurch gekennzeichnet, dass** das Ausgleichsmassenelement (18b) zumindest eine Durchführöffnung (34b) zu einer Durchführung zumindest eines Getriebeelements (24b) der Getriebeeinheit (12b) aufweist.

8. Handwerkzeugmaschine nach einem der vorherigen Ansprüche, **dadurch gekennzeichnet, dass** die Ausgleichseinheit (16a) zumindest eine Gehäuseeinheit (56a) aufweist, die ein Exzenterelement (38a) der Getriebeeinheit (12a) zumindest teilweise umgibt.

## Claims

1. Hand-held power tool, in particular a hammer drill and/or chipping hammer, having at least one transmission housing (10a; 10b), having at least one single-stage transmission unit (12a; 12b) disposed in the transmission housing (10a; 10b), having at least one motor housing (14a; 14b), and having at least one compensating unit (16a; 16b), which comprises at least one movably mounted compensating mass element (18a, 68a; 18b), wherein the compensating unit (16a) is disposed at least for the most part in the transmission housing (10a) or between the transmission housing (10b) and the motor housing (14b), **characterized in that** the single-stage transmission unit (12a; 12b) comprises at least transmission element (24a; 24b) that at least partly overlaps the compensating unit (16a; 16b), wherein the compensating unit (16a; 16b) has at least one lead-through opening (26a; 26b), through which the transmission element (24a; 24b) extends, at least partly.

2. Hand-held power tool according to Claim 1, **characterized in that** the compensating unit (16a) has a maximum extent, along a longitudinal axis (20a) of the compensating unit (16a), that corresponds at least substantially to a maximum extent of a transmission receiving space (22a) of the transmission housing (10a) along a longitudinal axis (20a') of the transmission housing (10a).

3. Hand-held power tool according to any one of the preceding claims, **characterized in that** the compensating unit (16a; 16b) at least one main contact surface (28a; 28b), which at least for the most part bears against the transmission housing (10a; 10b).

4. Hand-held power tool according to Claim 3, **characterized in that** the compensating unit (16b) has at least one further main contact surface (30b), which at least for the most part bears against the motor housing (14b).

5. Hand-held power tool according to any one of the preceding claims, **characterized in that** the compensating unit (16a; 16b) is realized as a subassembly that can be preassembled.

6. Hand-held power tool according to any one of the preceding claims, **characterized in that** the compensating mass element (18b) is realized, at least partly, as a hollow body (32b).

7. Hand-held power tool according to any one of the preceding claims, **characterized in that** the compensating mass element (18b) has at least one lead-through opening (34b) for lead-through of at least one transmission element (24b) of the transmission unit (12b).

8. Hand-held power tool according to any one of the preceding claims, **characterized in that** the compensating unit (16a) has at least one housing unit (56a), which at least partly surrounds an eccentric element (38a) of the transmission unit (12a).

## Revendications

1. Machine-outil manuelle, notamment perforateur et/ou marteau-burineur, pourvue d'au moins un carter de transmission (10a ; 10b), avec au moins une unité de transmission (12a ; 12b) mono-étagée, placée dans le carter de transmission (10a ; 10b), pourvue d'au moins un carter moteur (14a ; 14b) et pourvue d'au moins une unité compensatrice (16a ; 16b) qui comprend au moins un élément de masse d'équilibrage (18a, 68a ; 18b) logé de manière mobile, l'unité compensatrice (16a) étant placée au moins majoritairement dans le carter de transmission (10a) ou entre le carter de transmission (10b) et le carter moteur (14b), **caractérisée en ce que** l'unité de transmission (12a ; 12b) mono-étagée comprend au moins un élément de transmission (24a ; 24b) qui chevauche au moins en partie l'unité compensatrice (16a ; 16b), l'unité compensatrice (16a ; 16b) comportant au moins un orifice de passage (26a ; 26b) à travers lequel l'élément de transmission (24a ; 24b) s'étend au moins partiellement.

2. Machine-outil manuelle selon la revendication 1, **caractérisée en ce que** l'unité compensatrice (16a) présente une extension maximale le long d'un axe longitudinal (20a) de l'unité compensatrice (16a) qui correspond au moins sensiblement à une extension maximale d'un espace de logement de la transmission (22a) du carter de transmission (10a) le long d'un axe longitudinal (20a') du carter de transmission (10a).

3. Machine-outil manuelle selon l'une quelconque des revendications précédentes, **caractérisée en ce que** l'unité compensatrice (16a ; 16b) comporte au moins une surface de contact principale (28a ; 28b), qui est adjacente au moins en majeure partie au carter de transmission (10a ; 10b).

4. Machine-outil manuelle selon la revendication 3, **caractérisée en ce que** l'unité compensatrice (16b) comporte au moins une surface de contact principale (30b) supplémentaire, qui est adjacente au moins en majeure partie au carter moteur (14b).

5. Machine-outil manuelle selon l'une quelconque des revendications précédentes, **caractérisée en ce que** l'unité compensatrice (16a ; 16b) est conçue sous la forme d'un ensemble susceptible d'être monté préalablement.

6. Machine-outil manuelle selon l'une quelconque des revendications précédentes, **caractérisée en ce que** l'élément de masse d'équilibrage (18b) est conçu au moins en partie sous la forme d'un corps creux (32b).

7. Machine-outil manuelle selon l'une quelconque des revendications précédentes, **caractérisée en ce que** l'élément de masse d'équilibrage (18b) comporte au moins un orifice de passage (34b), destiné à faire passer au moins un élément de transmission (24b) de l'unité de transmission (12b).

8. Machine-outil manuelle selon l'une quelconque des revendications précédentes, **caractérisée en ce que** l'unité compensatrice (16a) comporte au moins une unité formant carter (56a) qui entoure au moins en partie un élément d'excentrique (38a) de l'unité de transmission (12a).
